# EUROPEAN PATENT SPECIFICATION

(11) **EP 4 077 462 B1**
(45) Date of publication and mention of the grant of the patent: **18.10.2023**
(21) Application number: 20821413.0
(22) Date of filing: 03.12.2020
(51) Int. Cl.: C08G 59/40, C08L 63/00, C09J 123/08, C09J 163/00

(54) **UV CURABLE COMPOSITION, UV CURABLE ADHESIVE FILM AND UV CURABLE ADHESIVE TAPE**
UV-HÄRTBARE ZUSAMMENSETZUNG, UV-HÄRTBARE KLEBEFOLIE UND UV-HÄRTBARES KLEBEBAND
COMPOSITION DURCISSABLE AUX UV, FILM ADHÉSIF DURCISSABLE AUX UV ET RUBAN ADHÉSIF DURCISSABLE AUX UV

(30) Priority: 18.12.2019 CN 201911313438
(43) Date of publication of application: 26.10.2022
(73) Proprietor: 3M Innovative Properties Company, Saint Paul, Minnesota 55133-3427 (US)
(72) Inventor: ZHANG, Enzhong, Shanghai 200336 (CN); HUAN, Hengyu, Shanghai 200336 (CN); REN, Pu, Shanghai 200336 (CN); SUN, Xinxin, Shanghai 200336 (CN)
(74) Representative: Mathys & Squire
(86) International application number: PCT/IB2020/061468
(87) International publication number: WO 2021/123998

(56) References cited:
- EP-A1- 2 585 534
- EP-A1- 2 900 779
- CN-A- 107 033 824
- CN-A- 108 264 730

## Description

### TECHNICAL FIELD

The present invention relates to the technical field of pressure sensitive adhesives, and more specifically to a UV curable composition, a UV curable adhesive film, and a UV curable adhesive tape.

### BACKGROUND

At present, household appliances (e.g., TVs, refrigerators, washing machines, and smoke exhaust ventilators), automobile products, and the like are subjected to increasingly higher requirements for aesthetic design. A current trend is to use adhesive tapes or adhesive films instead of bolts. At the same time, such products are also subjected to relatively high requirements for controlling odors coming from raw materials. Moreover, a current trend in the development of electronic products such as notebooks and hand-held mobile terminals is to design them to be smaller, lighter, thinner and, likewise, to having higher production efficiency. Given these trends, more and more polymer materials, e.g., plastic and rubber, are required in the design and manufacturing of such products. Therefore, adhesive products with high bonding strength in these materials need to be used so as to achieve firm bonding with a small bonding area and to also achieve the effect of having low odors.

Pressure sensitive adhesive tapes are a type of widely-used adhesive products. Bonding thereof can be achieved by applying small amounts of pressure for a short duration and without high-temperature curing at a temperature higher than 160 °C. The pressure sensitive adhesive tapes can be used for bonding directly after die-cutting, and continuous production thereof can be achieved. However, one critical disadvantage of pressure sensitive adhesive tapes is the weak bonding strength thereof, which generally does not exceed 1 MPa, thus making such adhesive tapes unsuitable for small area bonding.

Another widely used adhesive product is the foam tape. Similar to the pressure sensitive adhesives, bonding can be achieved by foam adhesive tapes as long as a small pressure is applied for a short duration and without a need for high-temperature curing at a temperature higher than 160 °C. Foam tapes can also be used for bonding directly after die-cutting, can achieve continuous production, and also have a higher bonding strength than pressure sensitive adhesives. However, the foam adhesive tape has a critical disadvantage of producing strong odors. Thus it is not suitable for use in interiors of household appliances or automobiles.

U.S. Patent application US2002/182955A1 (Weglewski) reveals an adhesive tape with a fiberreinforced single-layer structure. However, this structural adhesive tape requires adhesive film to be reinforced by a specific fiber to achieve desirable shape retention and bonding strength, thereby making the manufacturing process significantly more complex and causing significant increases in costs. In addition, the production process of this structural adhesive tape also requires vacuum hot pressing to achieve a desirable attaching effect, thereby causing significant increases in cost, causing harsh and undesirable conditions in the production process, and making this process difficult to industrialize.

Patent application EP2900779 discloses a thermally conductive adhesive composition, based on the total weight of the composition, comprising: (a) 5-70% by weight of an epoxy component; (b) 5-60% by weight of thermally conductive material; (c) 0.001-10% by weight of a photoinitiator; (d) 0-40% by weight of a thermoplastic polymer; (e) 0-50% by weight of a hydroxyl-functional component; and (f) 0-50% by weight of a halogen-free flame retardant. A thermally conductive adhesive tape comprising the adhesive composition is also disclosed.

Therefore, in this field adhesive films or adhesive tapes in the art that can exhibit desirable initial adhesivity is an expected development. It is hoped that such adhesive films or adhesive tapes will have high structural strength after curing, odorlessness or low odors, and cohesive failure after curing, so as to improve the stability of the bonding, and to also solve the problem of common overflow.

### SUMMARY

In view of the foregoing, the present invention aims to provide a novel ultraviolet (UV) curable composition, adhesive film or tape, which can achieve a good balance among the initial adhesivity, structural strength after curing, odorlessness or low odors, cohesive failure mode, and other aspects.

According to one aspect of the present invention, the present invention provides a UV curable composition comprising, based on the total weight thereof as 100 wt%:
25 to 60 wt% of an ethylene-vinyl acetate copolymer;
20 to 60 wt% of an epoxy resin;
5 to 20 wt% of glass bubbles;
0.3 to 8 wt% of a hydroxy-containing compound; and
0.5 to 5 wt% of a photoinitiator, wherein
the glass bubbles meet at least one of the following conditions A and B:
   A. the average true density of the glass bubbles ranges from 0.35 g/cc to 0.6 g/cc; and
   B. the hydrostatic pressure at which 10 vol% of the glass bubbles collapse is at least 20 MPa.

According to another aspect of the present invention, the present invention provides a UV curable adhesive film, where the UV curable adhesive film is prepared by the UV curable composition as described above.

According to a further aspect of the present invention, the present invention provides a UV curable adhesive tape, where the UV curable adhesive tape comprises the UV curable adhesive film as described above.

Advantages of the present invention include, but are not limited to the following aspects:
The present invention provides a UV curable composition with specific components. In the composition, an ethylene-vinyl acetate copolymer with elastomeric performance of rubber is employed as the basic material, an epoxy resin is employed as the curable material, and glass bubbles are employed as the filler. Glass bubbles can function for filling in the adhesive film system and can also appropriately reduce the strength of the cured structural adhesive film so that the failure mode of cured adhesive film is cohesive failure of cured adhesive itself when it is damaged, thereby improving bonding reliability.

In addition, a high molecular weight ethylene-vinyl acetate (EVA) copolymer is employed in the UV curable composition for forming the UV curable adhesive film structure of the present invention, and the use of an organic solvent is avoided in the process of preparing the adhesive film, allowing the UV curable adhesive film obtained by the present invention to have a property of a low odor or odorlessness.

In addition, the adhesive film according to the present invention can be formed by, for example, a hot-melt extrusion method, thereby easily and conveniently preparing the desired adhesive film. Preferably, the adhesive film prepared by the hot-melt extrusion method has a wider thickness range.

Moreover, the UV curable adhesive film provided by the present invention exhibits properties of ordinary pressure sensitive adhesive tapes at the initial stage of bonding, i.e., it has initial adhesivity, and it can bond to the adherend through the application of a small amount of pressure and can be subjected to die-cutting. The adhesive film can be cured to an adhesive tape with semi-structural strength to structural strength at room temperature after UV initiation, so it can bond to some plastics that are not resistant to high temperature, e.g., polycarbonate (PC), polymethyl methacrylate (PMMA), and acrylonitrile-butadiene-styrene copolymer (ABS). Furthermore, the adhesive film of the present invention has no odor or has a low odor, being particularly suitable for bonding between plastic parts, or between plastic parts and metal parts in internal members of household appliances and automobiles, as well as in hand-held mobile terminals of electronic products.

### DETAILED DESCRIPTION

After intensive research, the inventors of the present invention have unexpectedly found that the UV curable composition formed by adding appropriate glass bubbles can achieve a relatively good cohesive failure mode after curing, so as to provide a UV curable adhesive film with excellent performance balance.

In the present invention, a UV curable adhesive film is formed through the use of a UV curable composition of an ethylene-vinyl acetate copolymer/epoxy resin hybrid system with a specific composition.

As used in the description of an adhesive film herein, the term "curable" means that the adhesive film or composition mentioned can be cured through chemical reaction of the epoxy resin component in the adhesive film or composition initiated by the photoinitiator therein under UV-light induction. In the present invention, after UV-light irradiation or induction, even after removal of the UV source, the epoxy group can be further initiated to react at room temperature, thus completing the curing process (so-called active polymerization process). In addition, the adhesive films of the present invention are all produced by the hot-melt method to avoid the use of solvents so as to achieve the effect of a low odor.

The low-odor UV curable adhesive film provided by the present invention exhibits the property (i.e., initial adhesivity) of ordinary pressure sensitive adhesive tapes at the initial stage of bonding, and it can bond to the adherend by applying a small amount of pressure and can be subj ected to die-cutting; and after UV induction, the adhesive film can be cured to an adhesive tape with semi-structural strength to structural strength at room temperature after UV initiation, so it can bond to some plastics that are not resistant to high temperature, e.g., PC, PMMA, ABS, etc. Also, the UV curable composition of the present invention contains no solvent and the adhesive film is produced by the solvent-free hot-melt extrusion method so that the requirement of a low odor or odorlessness can be met, which is particularly suitable for bonding between plastic parts, or between plastic parts and metal parts in internal members of household appliances and automobiles, as well as in hand-held mobile terminals of electronic products.

As used herein, the term "structural adhesive" refers to an adhesive with a shear strength greater than 1000 psi between the adhesive tape and the bonding part (where 1 MPa is about 145 psi); the term "structural strength" refers to the shear strength equal to or greater than 1000 psi of the bonding component formed by the adhesive tape and the bonding part; and the term "semi-structural strength" refers to the shear strength greater than 100 psi but less than 1000 psi of the bonding component formed by the adhesive tape and the bonding part.

All figures for denoting characteristic dimensions, quantities and physicochemical properties used in this specification and claims are to be understood as modified by a term "about" in all situations, unless indicated otherwise. Therefore, unless stated conversely, parameters in numerical values listed in the above specification and the claims are all approximate values, and those skilled in the art are capable of seeking to obtain desired properties by taking advantage of contents of the teachings disclosed herein, and changing these approximate values appropriately. The use of numerical ranges represented by end points includes all figures within that range as well as any range within that range. For example, the range "1 to 5", etc.

In embodiments of the present invention, the present invention provides a UV curable composition. The UV curable composition comprises, based on the total weight thereof as 100 wt%: 25 to 60 wt% of an ethylene-vinyl acetate copolymer; 20 to 60 wt% of an epoxy resin; 5 to 20 wt% of glass bubbles; 0.3 to 8 wt% of a hydroxy-containing compound; and 0.5 to 5 wt% of a photoinitiator, where the glass bubbles meet at least one of the following conditions A and B: A. the average true density of the glass bubbles ranges from 0.35 g/cc to 0.6 g/cc; and B. the hydrostatic pressure at which 10 vol% of the glass bubbles collapse is at least 20 MPa.

Each component will be described below in detail.

### a) Ethylene-vinyl Acetate Copolymer

In the UV curable composition of the present invention, an ethylene-vinyl acetate copolymer with the elastomeric performance of rubber is used as a basic material. The ethylene-vinyl acetate copolymer (EVA) used in the invention may be an un-crosslinked or non-crosslinked ethylene-vinyl acetate linear copolymer, or may be a pre-crosslinked ethylene-vinyl acetate copolymer with a certain degree of crosslinking. According to the present invention, the term "pre-crosslinked" means that the crosslinking degree of the ethylene-vinyl acetate copolymer obtained by the ionizing radiation crosslinking method is in the range of 50% to 70%, characterized by the gel content.

In some preferred embodiments, the content of the vinyl acetate repeating unit in the ethylene-vinyl acetate copolymer is between 60-90 wt%, and preferably between 70-80 wt%. This is because the higher the content of vinyl acetate is, the higher the Tg of the copolymer is, and the higher the modulus of the cured adhesive film is, thereby making the obtained adhesive film or adhesive tape have higher shear strength.

The ethylene-vinyl acetate copolymer used in the present invention is preferably an un-crosslinked ethylene-vinyl acetate linear copolymer.

According to the technical solution of the invention, the UV curable composition comprises 25-60 wt%, preferably 30-55 wt% and more preferably 40-45 wt% of the ethylene-vinyl acetate copolymer, based on the total weight thereof.

The ethylene-vinyl acetate copolymer useful for the present invention is commercially available, and examples thereof include for example LEVAPREN 600, LEVAPREN 700, LEVAPREN 800, LEVAPREN 900, LEVAPREN 800 XL, and the like, available from Lanxess Corporation.

### b) Epoxy Resin

In the UV curable composition of the present invention, in addition to the ethylene-vinyl acetate copolymer as a basic material, epoxy resin is further used as a basic material and a curing component.

The epoxy resin useful for the present invention may be an epoxy resin known in the art. For example, in some embodiments, the epoxy resin used may contain one or a plurality of epoxy groups in the molecule, and preferably has an epoxy equivalent ranging from 150 to 600. Preferably, aromatic epoxy resins such as glycidyl ethers or esters obtained by reaction of polyphenols such as bisphenol A, bisphenol F, bisphenol S, hexahydrobisphenol A, tetramethylbisphenol A, diarylbisphenol A, tetramethylbisphenol F, with epichlorohydrin, for example, can be used in the present invention. Moreover, epoxidized polyolefins and the like are also usable epoxy resins.

Epoxy resins useful for the present invention are commercially available, and examples thereof include YD 128 (with an epoxy equivalent of about 187) and KD212 (with an epoxy equivalent of 535) available from Kunshan (Kudko) Chemical (South Korea).

The content of epoxy resin in the UV curable composition containing glass bubbles according to the present invention is generally at least 20 wt%, or 25 wt%, or 40 wt%; and the content of the epoxy resin is generally at most 60 wt%, or 58 wt%, or 55 wt%, or 50 wt%, or 45 wt%.

### c) Glass Bubble

The UV curable composition for forming the UV curable adhesive film of the present invention comprises glass bubbles, which has the function of physical filling in the adhesive film and reducing the cohesion of the cured adhesive film, so as to achieve cohesive failure for the failure of the cured adhesive film and to improve the bonding stability.

The "average true density" of the glass bubbles is the quotient of the mass of the glass bubble sample divided by the true volume measured by passing the glass bubbles of this mass through a gas pycnometer. The "true volume" is the overall aggregate volume rather than the loose volume of the glass bubbles. The average true density of the glass bubbles useful for implementing the present disclosure is generally at least 0.30 gram per cubic centimeter (g/cc), 0.35 g/cc, or 0.38 g/cc. In some embodiments, the average true density of glass bubbles useful for implementing the present disclosure is at most about 0.6 g/cc. "About 0.6 g/cc" means 0.57 g/cc to 0.63 g/cc (i.e., 0.6 g/cc ± 5%×0.6 g/cc). In some of these embodiments, the average true density of glass bubbles is at most 0.55 g/cc or 0.50 g/cc. For example, the average true density of glass bubbles disclosed herein may range from 0.30 g/cc to 0.6 g/cc, 0.30 g/cc to 0.55 g/cc, 0.35 g/cc to 0.60 g/cc, or 0.35 g/cc to 0.55 g/cc. For the purpose of the present disclosure, the average true density is measured using a pycnometer according to "average true particle density of hollow microspheres" in ASTM D2840-6 9.

The glass bubbles that can be used in the present invention generally need to be strong enough to remain after the processing process (e.g., Banbury grinding or double roll grinding) or other conventional mixing process (e.g., internal mixing) for rubber. The hydrostatic pressure at which 10 vol% of the glass bubbles collapse is at least about 20 megapascal (MPa). "About 20 MPa" means 19 MPa-21 MPa (i.e., 20 MPa ± 5 %×20 MPa). In some embodiments, the hydrostatic pressure at which 10 vol% of the glass bubbles collapse is at least about 28 MPa, 110 MPa, or 190 MPa. In some embodiments, the hydrostatic pressure at which 10 vol% of the glass bubbles collapse may be at least 100 MPa, 110 MPa, or 120 MPa. In some embodiments, the hydrostatic pressure at which 10 vol% or 20 vol% of the glass bubbles collapse is at most 250 (in some embodiments, at most 210 or 195) MPa. The hydrostatic pressure at which 10 vol% of the glass bubbles collapse may range from 20 MPa to 250 MPa, 28 MPato 210 MPa, or 28 MPa to 195 MPa. The above hydrostatic pressure values all mean said numerical value ± said numerical value × 5%. For the purpose of the present disclosure, the collapse strength of the glass bubbles is measured for the dispersion of the glass bubbles in glycerin, where the concentration of the glass bubbles in glycerin is 10 vol%, with "Hydrostatic Collapse Strength of Hollow Glass Microspheres" in ASTM D31 0 2-7.

Glass bubbles useful for implementing the present disclosure are commercially available, and include those sold by 3M Company (St. Paul, MN) under the trade name "3M GLASS BUBBLES" (e.g., Grades S60, S60HS, iM30K, iM16K, S38HS, S38XHS, K20 and K46). In some embodiments, in order to obtain the retention of more than 90%, glass bubbles useful for implementing the present disclosure may be selected to have a crushing strength of at least about 20 MPa.

The content of the glass bubbles in the UV curable composition containing the glass bubbles according to the invention is at least 5 wt%, or 7 wt%, or 8 wt% or 12 wt%; and the content of the glass bubbles is at most 20 wt%, or 18 wt%, or 16 wt%.

### d) Hydroxy-containing Compound

The UV curable composition for forming the UV curable adhesive film of the present invention comprises a hydroxy-containing compound which acts as a chain transfer agent when the epoxy group in the epoxy resin reacts under a cation mechanism.

The hydroxy-containing compound is one or more substances selected from the group consisting of polyols, polyol esters, and polyol ethers. Hydroxy-containing compounds useful for the present invention include ether or ester derivatives of such hydroxy-containing compounds. In some preferred embodiments, the hydroxy-containing compound may be a polyol compound. Examples of polyol that may be used include, but are not limited to polyether polyols, e.g., polyether diols; polyester polyols, e.g., polyester diols; bisphenol A polyols; and the like. One of the above polyols or a mixture of more than one of the above polyols may be used.

According to the technical solution of the present invention, the UV curable composition comprises at least 0.3 wt%, or 1 wt%, or 4 wt% of the hydroxy-containing compound; and at most 8 wt%, or 7 wt% of the hydroxy-containing compound, based on the total weight thereof as 100 wt%.

Hydroxy-containing compounds useful for the present invention are commercially available, and examples thereof include, for example, TONE 0230 Polyol, VORANOL 230-238, and VORANOL 2070 commercially available from Dow Chemical (U.S.); and DIANOL 285 commercially available from J4T Seppic Company (France), etc. In some embodiments, VORANOL 2070 is used, which is a polyether diol with a molecular weight of 700 available from U.S. Dow Chemical.

### e) Photoinitiator

The UV curable composition for forming the UV curable adhesive film of the present invention comprises a photoinitiator. Although the amount of the photoinitiator in the UV curable composition is low, the photoinitiator has a great influence on the curing speed and storage stability of the UV curable composition.

The photoinitiator useful for the present invention may be at least one selected from the group consisting of cationic photoinitiators. The cationic photoinitiators that can be used include, but are not limited to, one or more photoinitiators from the following group consisting of diazonium salt photoinitiators, iodonium salt photoinitiators, sulfonium salt photoinitiators, antimonate salt photoinitiators, and iron arene salt photoinitiators, and specific examples thereof include diaryl iodonium salts, diaryl sulfonium salts, alkyl sulfonium salts, iron arene salts, sulfonyloxyketone, and diaryl siloxyether. In some embodiments, diaryl sulfonium hexafluorophosphate or hexafluoroantimonate salts are used. Such photoinitiators are commercially available, and an example thereof is for example DOUBLECURE 1176 available from Double Bond Chemical Company, Taiwan, China.

In the present invention, the content of a photoinitiator such as a cationic photoinitiator in the above UV curable composition ranges from 0.5 to 5 wt% or 0.8 to 4 wt% respectively, based on the total weight of the UV curable composition. Generally, with the increase in the content of the photoinitiator such as a cationic photoinitiator, the curing speed of the UV curable composition is increased, but if the content is too high, then a curing speed that is too high will be caused, such that curing can occur even in sunlight (including a small amount of UV), thereby causing damage to the performance of the curable adhesive film or adhesive tape, for example poor storage stability at room temperature. If the amount of the cationic photoinitiator is too low, then requirement for the UV radiation energy is high during the curing, and the curing speed is low, thereby causing damage to performance of the curable adhesive film or adhesive tape.

### f) Antioxidant

The UV curable composition for forming the UV curable adhesive film of the present invention preferably comprises an optional antioxidant. The antioxidant in use can act to prevent the polymer from being oxidized in the process of hot-melt extrusion of the UV curable composition of the invention.

Antioxidants useful for the present invention include, but are not limited to phenol antioxidants, for example, alkyl monophenols, alkyl polyphenols, and thiopolyphenols. Such antioxidants are known in the art and are commercially available, and examples thereof include, for example, antioxidants 264, IRGANOX 1076, IRGANOX 2246, and IRGANOX 1010 available from BASF Corporation, Germany.

In the present invention, the antioxidant content in the above UV curable composition containing glass bubbles ranges from 0.5 to 2 wt% respectively, based on the total weight of the UV curable composition respectively. If the amount of the antioxidant added is too low, for example, less than 0.5 wt%, the antioxidant cannot have a good antioxidant effect; and if the amount of the antioxidant added is too high, for example, more than 2 wt%, the antioxidant may damage other aspects of performance.

### Other Ingredients

As known by those skilled in the art, according to requirements in practical applications, the UV curable composition of the present invention may contain other optional ingredients or additive aids well known in the art. There is no special restriction on the type and content of these other ingredients, as long as the performance desired for the UV curable composition and adhesive film according to the invention is not influenced.

In a preferred embodiment, the UV curable composition containing glass bubbles according to the present invention may comprise one or more substances selected from the group consisting of an electrically conductive agent, a thermally conductive agent, a flame retardant, and a filler. In a further preferred embodiment, the electrically conductive agents may be, for example, electrically conductive particles or conductive fibers (e.g., 2-45 wt%); the thermally conductive agents may be thermally conductive particles or thermally conductive fibers (e.g., 2-45 wt%); the flame retardant may be, for example, zinc borate (e.g., 2-30 wt%); and the filler may be fumed silica (e.g., 0.5-8 wt%), where the content of each component is based on the total weight of the corresponding UV curable composition as 100 wt%.

In preferred embodiments, the UV curable composition containing glass bubbles used in the present invention contains no solvent, in particular organic solvent. In such a case, the UV curable composition of the present invention may be in the form of, e.g., a powder or a particle mixture. Such a UV curable composition can be prepared by, for example, simply mixing each component in a mixing container or machine.

### Adhesive Film / Adhesive Tape

In the present invention, the adhesive film/tape can be formed by using the UV curable composition containing glass bubbles according to the present invention, for example or preferably by hot extrusion or melt extrusion. More specifically, the UV curable composition can be first extruded into a flexible or non-flexible substrate (including a release film or release paper) by hot extrusion or melt extrusion to form an adhesive film. The adhesive tape structure provided by the invention can provide a substrate on one surface adhesive film layer, or alternatively provide a release paper or release film only on one surface adhesive film layer of the adhesive film. Functioning as the release film or release paper, release films or release papers known in the prior art can be used, e.g., PET release films, glass papers, laminated papers, and polypropylene films.

Moreover, in addition to the above double-sided adhesive tape, the present invention can also provide a single-sided adhesive tape by replacing the above release paper or release film on one side of the adhesive film with the bonding substrate. This substrate is known in the art, and examples thereof include, but are not limited to, polymer films, woven or non-woven fabrics, metal foils, foams and combinations thereof.

The UV curable adhesive film provided by the present invention exhibits properties of ordinary pressure sensitive adhesive tapes at the initial stage of bonding, i.e., it has initial adhesivity, and it can bond to the adherend through the application of a small amount of pressure and can be subjected to die-cutting. The adhesive film can be cured to an adhesive tape with semi-structural strength to structural strength at room temperature after UV initiation, so it can bond to some plastics that are not resistant to high temperature, e.g., PC, PMMA and ABS. Further, the adhesive film of the present invention has no odor or has a low odor, being particularly suitable for bonding between plastic parts, or between plastic parts and metal parts in internal members of household appliances and automobiles, as well as in hand-held mobile terminals of electronic products.

### List of Particular Embodiments

1. A UV curable composition, the UV curable composition comprising, based on the total weight thereof as 100 wt%:
   25 to 60 wt% of an ethylene-vinyl acetate copolymer;
   20 to 60 wt% of an epoxy resin;
   5 to 20 wt% of glass bubbles;
   0.3 to 8 wt% of a hydroxy-containing compound; and
   0.5 to 5 wt% of a photoinitiator, wherein
   the glass bubbles meet at least one of the following conditions A and B:
      A. the average true density of the glass bubbles ranges from 0.35 g/cc to 0.6 g/cc; and
      B. the hydrostatic pressure at which 10 vol% of the glass bubbles collapse is at least 20 MPa.
2. The UV curable composition according to particular embodiment 1, wherein the content of vinyl acetate repeating units in the ethylene-vinyl acetate copolymer is 60 to 90 wt%, based on the weight of the ethylene-vinyl acetate copolymer as 100 wt%.
3. The UV curable composition according to particular embodiment 1 or 2, wherein the content of vinyl acetate repeating units in the ethylene-vinyl acetate copolymer is 70 to 80 wt%, based on the weight of the ethylene-vinyl acetate copolymer as 100 wt%.
4. The UV curable composition according to any of particular embodiments 1 to 3, wherein the ethylene-vinyl acetate copolymer is a pre-crosslinked ethylene-vinyl acetate copolymer or a non-crosslinked ethylene-vinyl acetate linear polymer.
5. The UV curable composition according to any of particular embodiments 1 to 3, wherein the ethylene-vinyl acetate copolymer is a non-crosslinked ethylene-vinyl acetate linear polymer.
6. The UV curable composition according to any of the above particular embodiments, wherein the epoxy resin is one or more substances selected from the group consisting of alicyclic epoxy resins or epoxidized polyolefins.
7. The UV curable composition according to any of the above particular embodiments, wherein the epoxy equivalent of the epoxy resin ranges from 150 to 600.
8. The UV curable composition according to any of the above particular embodiments, wherein the hydroxy-containing compound is one or more substances selected from the group consisting of polyols, polyol esters and polyol ethers.
9. The UV curable composition according to any of the above particular embodiments, wherein the UV curable composition comprises 4 to 8 wt% of a hydroxy-containing compound.
10. The UV curable composition according to any of the above particular embodiments, wherein the photoinitiator is a cationic photoinitiator.
11. The UV curable composition according to any of the above particular embodiments, wherein the cationic photoinitiator is one or more photoinitiators selected from the group consisting of diazonium salt photoinitiators, iodonium salt photoinitiators, sulfonium salt photoinitiators, antimonium salt photoinitiators and iron aromatic salt photoinitiators.
12. The UV curable composition according to any of the above particular embodiments, wherein the UV curable composition further comprises one or more substances from the group consisting of an electrically conductive agent, a thermally conductive agent, a flame retardant, and a filler.
13. The UV curable composition according to any of the above particular embodiments, wherein the electrically conductive agent being electrically conductive particles or electrically conductive fibers; the thermally conductive agent being thermally conductive particles or thermally conductive fibers; and the filler being fumed silica.
14. The UV curable composition according to any of the above particular embodiments, wherein the UV curable composition contains no solvent.
15. The UV curable composition according to any of the above particular embodiments, wherein the UV curable composition comprises, based on the total weight thereof as 100 wt%: 30 to 55 wt% of an ethylene-vinyl acetate copolymer.
16. The UV curable composition according to any of the above particular embodiments, wherein the UV curable composition comprises, based on the total weight thereof as 100 wt%: 26 to 51 wt% of an epoxy resin.
17. The UV curable composition according to any of the above particular embodiments, wherein the UV curable composition comprises, based on the total weight thereof as 100 wt%: 7 to 18 wt% of glass bubbles.
18. The UV curable composition according to any of the above particular embodiments, wherein the UV curable composition comprises, based on the total weight thereof as 100 wt%: 1 to 7 wt% of a hydroxy-containing compound.
19. The UV curable composition according to any of the above particular embodiments, the glass bubbles meet at least one of the following conditions A and B:
   A. the average true density of the glass bubbles ranges from 0.38 g/cc to 0.6 g/cc; and
   B. the hydrostatic pressure at which 10 vol% of the glass bubbles collapse is at least 28 MPa.
20. The UV curable composition according to any of the above particular embodiments, the UV curable composition comprising, based on the total weight thereof as 100 wt%:
   30 to 55 wt% of an ethylene-vinyl acetate copolymer;
   26 to 51 wt% of an epoxy resin;
   7 to 18 wt% of glass bubbles;
   1 to 7 wt% of a hydroxy-containing compound; and
   0.8 to 4 wt% of a photoinitiator, wherein
   the glass bubbles meet at least one of the following conditions A and B:
      A. the average true density of the glass bubbles rangs from 0.38 g/cc to 0.6 g/cc; and
      B. the hydrostatic pressure at which 10 vol% of the glass bubbles collapse is at least 28 MPa.
21. A UV curable adhesive film, wherein the UV curable adhesive film is prepared by the UV curable composition according to any of the above particular embodiments.
22. The UV curable adhesive film according to particular embodiment 21, wherein the UV curable adhesive film is formed by hot-melt extrusion of the UV curable composition.
23. The UV curable adhesive film according to particular embodiment 21 or 22, wherein the thickness of the UV curable adhesive film ranges from 10 µm to 300 µm.
24. A UV curable adhesive tape, wherein the UV curable adhesive tape includes the UV curable adhesive film according to any of particular embodiments 21 to 23.
25. The UV curable adhesive tape according to particular embodiment 24, wherein the UV curable adhesive tape further comprises a release paper or release film provided on one or two surfaces of the UV curable adhesive film.

### Embodiments

The present invention will be further described below in detail with reference to the embodiments and the comparative examples. It should be understood that the present invention is not limited to the following embodiments.

In the following embodiments and comparative examples, unless otherwise specified, "parts" refers to "parts by weight," "%" refers to "wt%," and "g" refers to the weight unit "gram." In the present invention, unless otherwise indicated, the used reagents are all commercially available products and are used directly without being further purified.

**Table 1. List of Raw Materials**

| Product name | Description | Supplier |
|---|---|---|
| LEVAPREN 600 | Un-crosslinked ethylene-vinyl acetate copolymer, with a content of vinyl acetate repeating units of 60 wt% | Lanxess Chemical, Germany |
| LEVAPREN 700 | Un-crosslinked ethylene-vinyl acetate copolymer, with a content of vinyl acetate repeating units of 70 wt% | Lanxess Chemical, Germany |
| LEVAPREN 800 | Un-crosslinked ethylene-vinyl acetate copolymer, with a content of vinyl acetate repeating units of 80 wt% | Lanxess Chemical, Germany |
| LEVAPREN 900 | Un-crosslinked ethylene-vinyl acetate copolymer, with a content of vinyl acetate repeating units of 90 wt% | Lanxess Chemical, Germany |
| LEVAPREN 800 XL | Pre-crosslinked (gel content: 60%) ethylene-vinyl acetate copolymer, with a content of vinyl acetate repeating units of 80 wt% | Lanxess Chemical, Germany |
| iM30K | Glass bubbles (average true density: 0.6 g/cc; hydrostatic pressure at which 10 vol% of the glass bubbles collapse: at least 193.2 MPa) | 3M Company |
| S38 | Glass bubbles (average true density: 0.38 g/cc; hydrostatic pressure at which 10 vol% of the glass bubbles collapse: at least 27.6 MPa) | 3M Company |
| iM16K | Glass bubbles (average true density: 0.46 g/cc; hydrostatic pressure at which 10 vol% of the glass bubbles collapse: at least 110.4 MPa) | 3M Company |
| K20 | Glass bubbles (average true density: 0.2 g/cc; hydrostatic pressure at which 10 vol% of the glass bubbles collapse: at least 3.45 MPa) | 3M Company |
| YD-128 | Bisphenol A epoxy resin compound | South Korea KUKDO Chemical |
| VORANOL 2070 | Polyether polyol | Dow Chemical, U.S. |
| IRGANOX 1010 | Antioxidant | BASF Corporation, Germany |
| DOUBLECURE 1176 | Photoinitiator | Double Bond Chemical, Taiwan, China |

### Testing Method

The odor, 180° peeling force, cohesive force (dynamic shear strength) and failure mode of various UV curable adhesive films prepared in the embodiments and comparative examples were tested according to the specific methods listed below.

### Odor Detection

The odors of the obtained adhesive films/tapes were assessed by manual olfaction and were considered as qualified when there was no irritating odor (i.e., no odor or low odor).

### 180° Peeling Force

The adhesive film samples not irradiated by UV and obtained in the embodiments or the comparative embodiments were cut into adhesive strips of 12.7 mm, the adhesive strips were attached to a stainless steel plate, which was rolled back and forth once by using a 2 Kg roller (machine: Rolldown, purchased from Cheminstruments, U.S.). After the preparation, the stainless steel plate to which the adhesive samples were attached was allowed to stand at room temperature for 20 minutes; and then the peeling force was tested at a peeling speed of 305 mm/min (machine: Instron 3300, purchased from Instron Company, U.S.). The measurements of 5 peeling force tests were recorded and the average value was taken as 180° peeling force (unit: N/mm), i.e., initial adhesivity. When the measured 180° peeling force is greater than or equal to 0.2 N/mm, then the adhesive sample is considered to have qualified initial adhesivity; when the measured 180° peeling force is greater than or equal to 0.3 N/mm, then the adhesive sample is considered to have desirable initial adhesivity; and when the measured 180° peeling force is greater than or equal to 0.45 N/mm, then the adhesive sample is considered to have excellent initial adhesivity.

### Dynamic Shear Strength

### (1) UV-induced Curing Test

The UV curable adhesive films/tapes containing glass bubbles obtained in the embodiments or comparative examples were cut into 25.4 mm × 25.4 mm adhesive strips. The release paper was peeled off, one adhesive surface was attached to a standard test steel plate, and the adhesive surface on the test steel plate was placed upward. A UV-LED ultraviolet lamp (Model KT403) from AVENTK Company was used, with the UV irradiation amount controlled at 3 J/cm² (8 min). The standard test steel plate was compounded with another standard test steel plate in 5 min, which was rolled back and forth once by using a 2 Kg roller (machine: Rolldown, purchased from Cheminstruments, U.S.) and stored for 48 h at a constant temperature of 23 °C and a constant humidity of 50% before testing. The specific procedure was performed in accordance with ASTM D3330.

### (2) Dynamic Shear Strength Test

According to the method described in FINAT FTM 2 (FINAT Technical Manual Test Method, 8th Edition) (FTM 2 is equivalent to the second test method), the above stored samples were tested and the shear strength was obtained. The used instrument was Instron 3300 from Instron Company, U.S. The measurements of 5 shear strength tests were recorded and the average value was taken as dynamic shear strength (unit: MPa). When the measured dynamic shear strength is greater than or equal to 4.5 MPa, the sample is considered to have a qualified post-cure structural strength; when the measured dynamic shear strength is greater than or equal to 5.0 MPa, the sample is considered to have desirable post-cure structural strength; and when the measured dynamic shear strength is greater than or equal to 7.0 MPa, the sample is considered to have excellent post-cure structural strength.

### Failure Mode

The failure mode of the adhesive film includes interface failure and cohesive failure. Interface Failure (IF) is defined as, after the aforementioned dynamic shear test, the adhesive film completely sheds from the bonding surface. Cohesive Failure (CF) is defined as, after the aforementioned dynamic shear test, the adhesive film itself ruptures. The cohesive failure indicates that the bonding is more stable and the bonding effect is better relative to the interface failure.

### Adhesive Tape Preparation

The adhesive tapes were prepared by the hot-melt extrusion method. According to the formula shown in Table 2 and table 3 below, various components such as the ethylene-vinyl acetate copolymer, the epoxy resin, the hydroxy compound, the photoinitiator, and the antioxidant were intensively mixed in a CPM-40 twin-screw extruder produced by CPM Company at 155 °C and extruded to a 5B2D release film produced by Baoyan Company in the form of composition, to form an adhesive film with a thickness of 200 µm, so as to prepare the adhesive tapes according to Embodiments 1 to 18 (E1-E18) and Comparative examples 1 to 9 (C1-C9), respectively.

**Table 2. Formulae Of UV Curable Compositions Of Embodiments 1 To 18 (E1-E18), And Performance Testing Results Of Adhesive Tapes Obtained Therefrom**

| Product name | E1 | E2 | E3 | E4 | E5 | E6 | E7 | E8 | E9 | E10 | E11 | E12 | E13 | E14 | E15 | E16 | E17 | E18 |
|---|---|---|---|---|---|---|---|---|---|---|---|---|---|---|---|---|---|---|
| LEVAPREN 600 | 40 | | | | | | | | | | | | | | | | | |
| LEVAPREN 700 | | 40 | | | | | | | | | | | | | | | | |
| LEVAPREN 800 | | | 40 | | | 40 | 40 | 43 | 36 | 30 | 55 | 40 | 36 | 40.7 | 36 | 41 | 38 | 40 |
| LEVAPREN 900 | | | | 40 | | | | | | | | | | | | | | |
| LEVAPREN 800 XL | | | | | 40 | | | | | | | | | | | | | |
| iM30K | 12 | 12 | 12 | 12 | 12 | | | 7 | 18 | 12 | 12 | 12 | 12 | 12 | 12 | 8 | 16 | 12 |
| S38 | | | | | | 12 | | | | | | | | | | | | |
| iM16K | | | | | | | 12 | | | | | | | | | | | |
| K20 | | | | | | | | | | | | | | | | | | |
| YD-128 | 41 | 41 | 41 | 41 | 41 | 41 | 41 | 43 | 39 | 51 | 26 | 44 | 42 | 41.5 | 43 | 44 | 39 | 42 |
| VORANOL 2070 | 4 | 4 | 4 | 4 | 4 | 4 | 4 | 4 | 4 | 4 | 4 | 1 | 7 | 4 | 4 | 4 | 4 | 4 |
| IRGANOX 1010 | 1 | 1 | 1 | 1 | 1 | 1 | 1 | 1 | 1 | 1 | 1 | 1 | 1 | 1 | 1 | 1 | 1 | |
| DOUBLECURE 1176 | 2 | 2 | 2 | 2 | 2 | 2 | 2 | 2 | 2 | 2 | 2 | 2 | 2 | 0.8 | 4 | 2 | 2 | 2 |
| 180° peeling force (N/mm) | 0.74 | 0.63 | 0.5 | 0.32 | 0.21 | 0.47 | 0.36 | 0.45 | 0.33 | 0.3 | 0.31 | 0.28 | 0.53 | 0.49 | 0.5 | 0.44 | 0.45 | 0.52 |
| Dynamic shear strength (MPa) | 5.4 | 7.3 | 9.5 | 8.9 | 8.7 | 4.6 | 5.3 | 9.1 | 9.3 | 5.8 | 52 | 6.7 | 5 | 7.9 | 6.6 | 5.5 | 6.1 | 9 |
| Failure mode | CF | CF | CF | CF | CF | CF | CF | CF | CF | CF | CF | CF | CF | CF | CF | CF | CF | CF |

**Table 3. Formulae Of UV Curable Compositions Of Comparative Examples 1 To 9 (C1-C9), And Performance Testing Results Of Adhesive Tapes Obtained Therefrom**

| Product name | C1 | C2 | C3 | C4 | C5 | C6 | C7 | C8 | C9 |
|---|---|---|---|---|---|---|---|---|---|
| LEVAPREN 600 | | | | | | | | | |
| LEVAPREN 700 | | | | | | | | | |
| LEVAPREN 800 | 40 | 22 | 63 | 44 | 33 | 40.7 | 36 | 40 | 36 |
| LEVAPREN 900 | | | | | | | | | |
| LEVAPREN 800 XL | | | | | | | | | |
| iM30K | | 12 | 12 | 4 | 22 | 12 | 12 | 12 | 12 |
| S38 | | | | | | | | | |
| iM16K | | | | | | | | | |
| K20 | 12 | | | | | | | | |
| YD-128 | 41 | 59 | 18 | 45 | 38 | 41.9 | 41 | 44.8 | 39 |
| VORANOL 2070 | 4 | 4 | 4 | 4 | 4 | 4 | 4 | 0.2 | 10 |
| IRGANOX 1010 | 1 | 1 | 1 | 1 | 1 | 1 | 1 | 1 | 1 |
| DOUBLECURE 1176 | 2 | 2 | 2 | 2 | 2 | 0.4 | 6 | 2 | 2 |
| 180° peeling force (N/mm) | 0.21 | 0.12 | NA | 0.42 | NA | 0.53 | 0.52 | 0.23 | 0.62 |
| Dynamic shear strength (MPa) | 5.7 | 2.4 | NA | 6.2 | NA | 0.2 | 1.8 | 3.2 | 1.8 |
| Failure mode | IF | IF | NA | IF | NA | CF | IF | IF | CF |

Firstly, the adhesive films/adhesive tapes prepared in the above embodiments and comparative example were detected for the odor, and they were all odorless or low-odor products and could be applied to the bonding between plastic parts, or between plastic parts and metal parts in internal members of household appliances and automobiles, as well as in hand-held mobile terminals of electronic products.

Secondly, it can be seen from Table 2 that, the UV curable compositions in Embodiments 1 to 18 had the specific components and specific contents thereof as required by the invention, and the corresponding adhesive films/adhesive tapes had desirable initial adhesivity, peeling force after curing and failure mode.

The adhesive films/adhesive tapes provided in Comparative examples 1 to 9 did not have desirable initial adhesivity, peeling force after curing and failure mode due to the absence of specific components and specific contents thereof required by the invention.

In Embodiments 1 to 4, the UV curable compositions contained different ethylene-vinyl acetate copolymers, and the contents of vinyl acetate repeating units in the ethylene-vinyl acetate copolymers were 60 to 90 wt%. With the increase of the content of vinyl acetate repeating units in the ethylene-vinyl acetate copolymer used (i.e., relatively high), the corresponding glass transition temperature also gradually increased, and thus the 180° peeling force (initial adhesivity) of the uncured adhesive film gradually decreased. The modulus of the adhesive film after curing also increased gradually, the dynamic shear strength reached the maximum value with Levapren 800, and the failure mode was cohesive failure. According to Embodiments 2 and 3, the ethylene-vinyl acetate copolymer, where the content of vinyl acetate repeating units was 70 to 80 wt%, was used, and the corresponding tapes exhibited excellent initial adhesivity (180° peeling force before curing), dynamic shear strength and failure mode.

In Embodiment 5, a pre-crosslinked ethylene-vinyl acetate copolymer was used. Due to the high modulus of the pre-crosslinked ethylene-vinyl acetate copolymer, the 180° peeling force (initial adhesivity) of the uncured adhesive film was reduced, as compared with Embodiments 1 to 4.

In Embodiments 3, 10 and 11, and Comparative examples 2 and 3, the ethylene-vinyl acetate copolymer was used respectively at different contents. When the content of the ethylene-vinyl acetate copolymer was within the range of the present invention, the prepared adhesive films all had good initial adhesivity, dynamic shear strength, and failure mode. The adhesive film corresponding to Embodiment 3 had excellent initial adhesivity, dynamic shear strength, and failure mode. The formula of Comparative example 2 had a low content of the ethylene-vinyl acetate copolymer resin, and because the resin content was too low, it was very difficult for the extruded composite to form an adhesive film, and the cured adhesive film suffered from interface failure. The formula of Comparative example 3 had a higher content of the ethylene-vinyl acetate copolymer resin, and because the resin content was too high and the melt viscosity was too high, the mixed system could not be coated by hot-melt extrusion.

In Embodiments 5, 6 and 7, three types of glass bubbles conforming to the requirements of the invention were used, and the corresponding adhesive films all had the failure mode of cohesive failure, qualified shear strength, and initial adhesivity. In Comparative example 1, a type of glass bubble having a density less than 0.35 g/cc and providing a hydrostatic pressure of 3.45 MPa at which 10 vol% of the glass bubbles collapse was used. The adhesive film after curing could achieve a high shear strength, but the failure mode of the adhesive film was still interface failure as the glass bubbles were damaged in the shear process and thus collapsed.

In Embodiments 5, 8, 9, 16 and 17, the adhesive films prepared with different contents of iM30K glass bubbles all had a high shear strength and a cohesive failure mode. The content of glass bubbles in Comparative example 4 was too low, and the content of glass bubbles in Comparative example 5 was too high. Specifically, the glass bubbles at a low content used in Comparative example 4 could not function well in filling, and the failure mode of the cured adhesive film was still interface failure. A higher content of glass bubble was used in Comparative example 5. The higher content of glass bubble made the melt viscosity of the system too high, and the mixed system could not be coated by hot-melt extrusion.

In Embodiments 3, 12 and 13, and Comparative examples 8 and 9, different contents of polyol were used. It can be seen that when the polyol content was within the range of the present invention, the corresponding adhesive films all had a failure mode of cohesive failure, qualified shear strength, and initial adhesivity. When the polyol content was controlled within the preferred range, the adhesive films as prepared in Embodiments 3 and 13 all had high shear strength, initial adhesivity, and a cohesive failure mode. In Comparative examples 8 and 9, when the hydroxy-containing compound was used at a content that was too low or too high, the overly low content of the hydroxy compound made the curing speed low and desirable shear strength could not be achieved within a certain period of time. The overly high content of the hydroxy compound decreased the overall modulus of the adhesive film and also decreased the shear modulus of the adhesive film.

In Embodiments 3, 14 and 15, the 3 adhesive films prepared with different contents of the photoinitiator all could have a high shear strength and a cohesive failure mode. In Comparative example 6, the photoinitiator content was too low, leading to difficult curing of the adhesive film, poor dynamic shear strength of the adhesive film prepared, and degraded comprehensive performance. In Comparative example 7, the photoinitiator content was too high, and curing was too fast in the UV irradiation process, leading to a poor acting force between the adhesive film and the substrate, interface failure with regards to the failure mode after curing, and low shear strength.

The embodiments and examples of the present invention described above are just exemplary descriptions of the present invention, and are not intended to limit the concept and scope of the present invention. Various modifications and improvements may be made to the technical solution of the present invention by those skilled in the art without departing from the design concept of the present invention, which shall be all included in the protection scope of the present invention.

## Claims

1. A UV curable composition, the UV curable composition comprising, based on the total weight thereof as 100 wt%:
25 to 60 wt% of an ethylene-vinyl acetate copolymer;
20 to 60 wt% of an epoxy resin;
5 to 20 wt% of glass bubbles;
0.3 to 8 wt% of a hydroxy-containing compound; and
0.5 to 5 wt% of a photoinitiator, wherein
the glass bubbles meet at least one of the following conditions A and B:
A. the average true density of the glass bubbles ranges from 0.35 g/cc to 0.6 g/cc; and
B. the hydrostatic pressure at which 10 vol% of the glass bubbles collapse is at least 20 MPa wherein the average true density and the hydrostatic pressure are measured by the methods according to the description.

2. The UV curable composition according to claim 1, wherein the content of vinyl acetate repeating units in the ethylene-vinyl acetate copolymer is 60 to 90 wt%, based on the weight of the ethylene-vinyl acetate copolymer as 100 wt%.

3. The UV curable composition according to claim 1, wherein the ethylene-vinyl acetate copolymer is a pre-crosslinked ethylene-vinyl acetate copolymer or a non-crosslinked ethylene-vinyl acetate linear polymer wherein the term "pre-crosslinked" means that the crosslinking degree of the ethylene-vinyl acetate copolymer obtained by the ionizing radiation crosslinking method is in the range of 50% to 70%, **characterized by** the gel content.

4. The UV curable composition according to claim 3, wherein the ethylene-vinyl acetate copolymer is a non-crosslinked ethylene-vinyl acetate linear polymer.

5. The UV curable composition according to claim 1, wherein the epoxy resin is one or more substances selected from the group consisting of alicyclic epoxy resins or epoxidized polyolefins.

6. The UV curable composition according to claim 1, wherein the epoxy equivalent of the epoxy resin ranges from 150 to 600.

7. The UV curable composition according to claim 1, wherein the hydroxy-containing compound is one or more substances selected from the group consisting of polyols, polyol esters, and polyol ethers.

8. The UV curable composition according to claim 1, wherein the UV curable composition further comprises one or more substances from the group consisting of an electrically conductive agent, a thermally conductive agent, a flame retardant, and a filler.

9. The UV curable composition according to claim 8, wherein the electrically conductive agents being electrically conductive particles or electrically conductive fibers; the thermally conductive agents being thermally conductive particles or thermally conductive fibers; and the filler being fumed silica.

10. The UV curable composition according to claim 1, wherein the UV curable composition comprises, based on the total weight thereof as 100 wt%:
30 to 55 wt% of an ethylene-vinyl acetate copolymer;
26 to 51 wt% of an epoxy resin;
7 to 18 wt% of glass bubbles;
1 to 7 wt% of a hydroxy-containing compound; and
0.8 to 4 wt% of a photoinitiator, wherein
the glass bubbles meet at least one of the following conditions A and B:
A. the average true density of the glass bubbles ranges from 0.38 g/cc to 0.6 g/cc; and
B. the hydrostatic pressure at which 10 vol% of the glass bubbles collapse is at least 28 MPa.

11. A UV curable adhesive film, wherein the UV curable adhesive film is prepared from the UV curable composition according to any of claims 1 to 10.

12. The UV curable adhesive film according to claim 11, wherein the UV curable adhesive film is formed by hot-melt extrusion of the UV curable composition.

13. The UV curable adhesive film according to claim 11, wherein the thickness of the UV curable adhesive film ranges from 10 µm to 300 µm.

14. A UV curable adhesive tape, wherein the UV curable adhesive tape comprises the UV curable adhesive film according to any of claims 11 to 13.

15. The UV curable adhesive tape according to claim 14, wherein the UV curable adhesive tape further comprises a release paper or release film provided on one or two surfaces of the UV curable adhesive film.

## Patentansprüche

1. Eine UV-härtbare Zusammensetzung, wobei die UV-härtbare Zusammensetzung, bezogen auf das Gesamtgewicht davon als 100 Gew.-%, umfasst:
zu 25 bis 60 Gew.-% ein Ethylen-Vinylacetat-Copolymer;
zu 20 bis 60 Gew.-% ein Epoxidharz;
zu 5 bis 20 Gew.-% Glasblasen;
zu 0,3 bis 8 Gew.-% eine hydroxyhaltige Verbindung; und
zu 0,5 bis 5 Gew.-% einen Photoinitiator, wobei
die Glasblasen mindestens eine der folgenden Bedingungen A und B erfüllen:
A. die durchschnittliche wahre Dichte der Glasblasen reicht von 0,35 g/cm³ bis 0,6 g/cm³; und
B. der hydrostatische Druck, bei dem 10 Vol.-% der Glasblasen zusammenfallen, liegt bei mindestens 20 MPa, wobei die durchschnittliche wahre Dichte und der hydrostatische Druck durch die Verfahren gemäß der Beschreibung gemessen werden.

2. Die UV-härtbare Zusammensetzung nach Anspruch 1, wobei der Gehalt an Vinylacetat-Wiederholungseinheiten in dem Ethylen-Vinylacetat-Copolymer 60 bis 90 Gew.-% beträgt, bezogen auf das Gewicht des Ethylen-Vinylacetat-Copolymers als 100 Gew.-%.

3. Die UV-härtbare Zusammensetzung nach Anspruch 1, wobei das Ethylen-Vinylacetat-Copolymer ein vorvernetztes Ethylen-Vinylacetat-Copolymer oder ein nicht vernetztes lineares Ethylen-Vinylacetat-Polymer ist, wobei der Begriff "vorvernetzt" bedeutet, dass der Vernetzungsgrad des Ethylen-Vinylacetat-Copolymers, das durch das Verfahren zur Vernetzung durch ionisierende Strahlung erhalten wird, im Bereich von 50 % bis 70 % liegt, **gekennzeichnet durch** den Gelgehalt.

4. Die UV-härtbare Zusammensetzung nach Anspruch 3, wobei das Ethylen-Vinylacetat-Copolymer ein nicht vernetztes lineares Ethylen-Vinylacetat-Polymer ist.

5. Die UV-härtbare Zusammensetzung nach Anspruch 1, wobei das Epoxidharz eine oder mehrere Substanzen ist, die aus der Gruppe ausgewählt sind, bestehend aus alicyclischen Epoxidharzen oder epoxidierten Polyolefinen.

6. Die UV-härtbare Zusammensetzung nach Anspruch 1, wobei das Epoxyäquivalent des Epoxidharzes von 150 bis 600 reicht.

7. Die UV-härtbare Zusammensetzung nach Anspruch 1, wobei die hydroxyhaltige Verbindung eine oder mehrere Substanzen ist, die aus der Gruppe ausgewählt sind, bestehend aus Polyolen, Polyolestern und Polyolethern.

8. Die UV-härtbare Zusammensetzung nach Anspruch 1, wobei die UV-härtbare Zusammensetzung ferner eine oder mehrere Substanzen aus der Gruppe, bestehend aus einem elektrisch leitfähigen Mittel, einem wärmeleitfähigen Mittel, einem Flammschutzmittel und einem Füllstoff, umfasst.

9. Die UV-härtbare Zusammensetzung nach Anspruch 8, wobei die elektrisch leitfähigen Mittel elektrisch leitfähige Teilchen oder elektrisch leitfähige Fasern sind; die wärmeleitfähigen Mittel wärmeleitfähige Teilchen oder wärmeleitfähige Fasern sind; und wobei der Füllstoff pyrogenes Siliciumdioxid ist.

10. Die UV-härtbare Zusammensetzung nach Anspruch 1, wobei die UV-härtbare Zusammensetzung, bezogen auf ihr Gesamtgewicht als 100 Gew.-%, umfasst:
zu 30 bis 55 Gew.-% ein Ethylen-Vinylacetat-Copolymer;
zu 26 bis 51 Gew.-% ein Epoxidharz;
zu 7 bis 18 Gew.-% Glasblasen;
zu 1 bis 7 Gew.-% eine hydroxyhaltige Verbindung; und
zu 0,8 bis 4 Gew.-% einen Photoinitiator, wobei
die Glasblasen mindestens eine der folgenden Bedingungen A und B erfüllen:
A. die durchschnittliche wahre Dichte der Glasblasen reicht von 0,38 g/cm³ bis 0,6 g/cm³; und
B. der hydrostatische Druck, bei dem 10 Vol.-% der Glasblasen zusammenfallen, beträgt mindestens 28 MPa.

11. Eine UV-härtbare Klebefolie, wobei die UV-härtbare Klebefolie aus der UV-härtbaren Zusammensetzung nach einem der Ansprüche 1 bis 10 hergestellt ist.

12. Die UV-härtbare Klebefolie nach Anspruch 11, wobei die UV-härtbare Klebefolie durch Heißschmelzen der UV-härtbaren Zusammensetzung gebildet ist.

13. Die UV-härtbare Klebefolie nach Anspruch 11, wobei die Dicke der UV-härtbaren Klebefolie von 10 µm bis 300 µm reicht.

14. Ein UV-härtbares Klebeband, wobei das UV-härtbare Klebeband die UV-härtbare Klebefolie nach einem der Ansprüche 11 bis 13 umfasst.

15. Das UV-härtbare Klebeband nach Anspruch 14, wobei das UV-härtbare Klebeband ferner ein Trennpapier oder eine Trennfolie umfasst, das bzw. die auf einer oder zwei Oberflächen der UV-härtbaren Klebefolie bereitgestellt ist.

## Revendications

1. Composition durcissable aux UV comprenant, sur la base du poids total de celle-ci pour 100 % en poids :
25 à 60 % en poids d'un copolymère d'éthylène-acétate de vinyle ;
20 à 60 % en poids d'une résine époxy ;
5 à 20 % en poids de bulles de verre ;
0,3 à 8 % en poids d'un composé hydroxy ; et
0,5 à 5 % en poids d'un photoamorceur, dans laquelle
les bulles de verre satisfont au moins l'une des conditions A et B suivantes :
A. la densité réelle moyenne des bulles de verre va de 0,35 g/cm³ à 0,6 g/cm³ ; et
B. la pression hydrostatique à laquelle 10 % en volume des bulles de verre s'effondre est au moins de 20 MPa où la densité réelle moyenne et la pression hydrostatique sont mesurées par les procédés selon la description.

2. Composition durcissable aux UV selon la revendication 1, dans laquelle la teneur en motifs répétés d'acétate de vinyle dans le copolymère d'éthylèneacétate de vinyle est de 60 à 90 % en poids, sur la base du poids du copolymère d'éthylène-acétate de vinyle pour 100 % en poids.

3. Composition durcissable aux UV selon la revendication 1, dans laquelle le copolymère d'éthylène-acétate de vinyle est un copolymère d'éthylène-acétate de vinyle pré-réticulé ou un polymère linéaire d'éthylène-acétate de vinyle non réticulé dans lequel le terme « pré-réticulé » signifie que le degré de réticulation du copolymère d'éthylène-acétate de vinyle obtenu par le procédé de réticulation par rayonnement ionisant se situe dans la plage de 50 à 70 %, **caractérisé par** le taux de gel.

4. Composition durcissable aux UV selon la revendication 3, dans laquelle le copolymère d'éthylène-acétate de vinyle est un polymère linéaire d'éthylèneacétate de vinyle non réticulé.

5. Composition durcissable aux UV selon la revendication 1, dans laquelle la résine époxy est une ou plusieurs substances choisies dans le groupe constitué de résines époxy alicycliques ou de polyoléfines époxydées.

6. Composition durcissable aux UV selon la revendication 1, dans laquelle l'équivalent époxy de la résine époxy va de 150 à 600.

7. Composition durcissable aux UV selon la revendication 1, dans laquelle le composé hydroxy est une ou plusieurs substances choisies dans le groupe constitué de polyols, d'esters de polyol et d'éthers de polyol.

8. Composition durcissable aux UV selon la revendication 1, dans laquelle la composition durcissable aux UV comprend en outre une ou plusieurs substances à partir du groupe constitué d'un agent électroconducteur, d'un agent thermoconducteur, d'un agent ignifuge et d'une charge.

9. Composition durcissable aux UV selon la revendication 8, dans laquelle les agents électroconducteurs étant des particules électriquement conductrices ou des fibres électroconductrices ; les agents thermiquement conducteurs étant des particules thermiquement conductrices ou des fibres thermoconductrices ; et la charge étant de la silice pyrogénée.

10. Composition durcissable aux UV selon la revendication 1, dans laquelle la composition durcissable aux UV comprend, sur la base du poids total de celle-ci, pour 100 % en poids :
30 à 55 % en poids d'un copolymère d'éthylène-acétate de vinyle ;
26 à 51 % en poids d'une résine époxy ;
7 à 18 % en poids de bulles de verre ;
1 à 7 % en poids d'un composé hydroxy ; et
0,8 à 4 % en poids d'un photoamorceur, dans laquelle
les bulles de verre satisfont au moins l'une des conditions A et B suivantes :
A. la densité réelle moyenne des bulles de verre va de 0,38 g/cm³ à 0,6 g/cm³ ; et
B. la pression hydrostatique à laquelle 10 % en volume des bulles de verre s'effondre est d'au moins 28 MPa.

11. Film adhésif durcissable aux UV, dans lequel le film adhésif durcissable aux UV est préparé à partir de la composition durcissable aux UV selon l'une quelconque des revendications 1 à 10.

12. Film adhésif durcissable aux UV selon la revendication 11, dans lequel le film adhésif durcissable aux UV est formé par extrusion thermofusible de la composition durcissable aux UV.

13. Film adhésif durcissable aux UV selon la revendication 11, dans lequel l'épaisseur du film adhésif durcissable aux UV est comprise entre 10 µm et 300 µm.

14. Ruban adhésif durcissable aux UV, dans lequel le ruban adhésif durcissable aux UV comprend le film adhésif durcissable aux UV selon l'une quelconque des revendications 11 à 13.

15. Ruban adhésif durcissable aux UV selon la revendication 14, dans lequel le ruban adhésif durcissable aux UV comprend en outre un papier anti-adhésif ou un film anti-adhésif fourni sur une ou deux surfaces du film adhésif durcissable aux UV.
